# EUROPEAN PATENT APPLICATION

(11) **EP 4 191 091 A1**
(43) Date of publication of application: **07.06.2023**
(21) Application number: 21212427.5
(22) Date of filing: 06.12.2021
(51) Int. Cl.: F16F 15/315, H02K 7/02

(54) **FLYWHEEL DEVICE FOR A SYNCHRONOUS CONDENSER**

(71) Applicant: ABB SCHWEIZ AG, 5400 Baden (CH)
(72) Inventor: PORSBY, Gunnar, Västerås (SE); POPOVIC SANDBERG, Alexandra, Västerås (SE); LUNDIN, Magnus, Västerås (SE); BERGMAN, Mari, Västerås (SE); FLOOD, Mats, Sala (SE); BJERHAG, David, Västerås (SE); LUNDQVIST, Jonas, Västerås (SE); SKÖLDMARK, Staffan, Västerås (SE)
(74) Representative: Kransell & Wennborg KB

(57) **Abstract**

A flywheel device (1) for a synchronous condenser, comprising: a flywheel shaft (3), a flywheel unit (5) having a moment of inertia of at least 10000 kgm², arranged around the flywheel shaft (3), a protective cage arranged radially outside the flywheel unit (5), and an outer casing accommodating the flywheel unit (5) and the protective cage.

## Description

### TECHNICAL FIELD

The present disclosure generally relates to frequency compensation in electric grids.

### BACKGROUND

Modern electric grids rely more and more on renewable energy sources such as wind turbines, solar energy sources, and wave and tidal energy sources. This results in that the grid loses some of its traditionally inherent properties provided by the rotating mass of large generators in traditional power plants. Wind turbines, for example, are generally connected to the grid via power converters, and photovoltaic cells and many other renewable energy sources do not have any rotating mass.

Flywheels have been used together with synchronous condensers to provide active and reactive power compensation. The flywheel increases the rotating mass of the synchronous condenser and thus counteracts frequency fluctuations in the grid for example due to momentary load variations.

Flywheels used in grid compensating applications generally have a very large moment of inertia to compensate for load variations in the grid. Therefore, to protect the surroundings in case of a flywheel fault, such as a loose rotor event or a burst disc fault, the flywheel may be arranged in a reinforced concrete structure. A loose rotor event is caused by a failure in the oil lubrication system of the bearings of the flywheel and may cause the entire flywheel shaft to come loose. A burst disc fault is caused by cracks in the flywheel and may lead to the entire or a part of the flywheel coming loose.

It is cumbersome to build protective structures, and they may in worst case scenarios fail to provide adequate protection in some fault situations.

### SUMMARY

A general object of the present disclosure is to provide a flywheel device that solves or at least mitigates the problems of the prior art.

There is hence according to a first aspect of the present disclosure provided a flywheel device for a synchronous condenser, comprising: a flywheel shaft, a flywheel unit having a moment of inertia of at least 10000 kgm², arranged around the flywheel shaft, a protective cage arranged radially outside the flywheel unit, and an outer casing accommodating the flywheel unit and the protective cage.

The protective cage is configured to provide protection from the flywheel unit in case of a fault. The protective case is designed to withstand flywheel unit failures such as burst disc faults and loose rotor events. The protective cage is dimensioned in terms of thickness to keep the flywheel unit within the protective cage in case of flywheel unit failures such as burst disc faults and loose rotor events.

The flywheel device may thus be made more compact than existing flywheel devices for synchronous condensers built into reinforced concrete structures. It is further simpler to install the flywheel device and it provides adequate protection against catastrophic failures such as loose rotor events and burst disc faults.

The flywheel unit may according to an example have a moment of inertia of at least 20000 kgm², such as at least 25000 kgm².

The term flywheel device as used herein excludes rotating electric machines such as generators and motors.

There is no electromagnetic interaction between the flywheel unit and the protective cage when the flywheel unit rotates.

The flywheel unit and the protective cage are free of electrically conducting windings.

According to one embodiment the protective cage comprises an annular core circumferentially entirely enclosing the flywheel unit. The annular core thus extends around the entire circumference of the flywheel unit.

The axial length of the annular core may be at least as great as the axial length of the flywheel unit.

The annular core is arranged radially spaced apart from the circumferential surface of the flywheel unit.

The annular core may be solid. The annular core may alternatively comprise a plurality of radial cooling ducts.

The annular core has a circular through-opening in which the flywheel unit is arranged.

According to one embodiment the annular core has a radial thickness dimension of at least 0.1 m, such as at least 0.2 m.

According to one embodiment the annular core has radial thickness dimension of at most 0.6 m.

According to one embodiment the annular core comprises a plurality of sheets or plates arranged one after the other in a longitudinal direction of the flywheel shaft.

According to one embodiment the protective cage comprises a first and a second axial end wall attached to a respective axial end of the annular core, each of the first and the second axial end wall being provided with an end opening that has a smaller area than a circular through-opening of the annular core. Each end opening is thus smaller than the circular through-opening of the annular core. The first and the second axial end walls thus provide lateral protection against the flywheel unit which is enclosed in the protective cage.

According to one embodiment the first axial end wall is mounted to a first axially outermost sheet or plate at a first axial end of the annular core and the second axial end wall is mounted to a second axially outermost sheet or plate at a second axial end of the annular core.

One embodiment comprises crossbeams extending between the first axial end wall and the second axial end wall. Further reinforcement of the protective cage is thereby provided.

According to one embodiment the protective cage comprises a first and a second ground attachment structure for attaching the protective cage to the ground. The flywheel device can thus be fixated to ground to ensure that it cannot overturn.

The first ground attachment structure and the second ground attachment structure may for example comprise through-openings configured to receive bolts and/or screws for attaching the annular core to the ground.

According to one embodiment the first ground attachment structure and the second ground attachment structure support the annular core. The first ground attachment structure and the second ground attachment structure are arranged underneath the annular core.

The first ground attachment structure and the second ground attachment structure may be arranged integral with the annular core.

The first ground attachment structure and the second ground attachment structure may be welded to the annular core and/or they may be attached to the annular core by means of screws or bolts, and/or by press fitting.

According to one example a subset of the sheets or plates may extend radially further away from other sheets or plates in a radial outward direction. Each one of these sheets or plates may extend to and may be in direct contact with at least one of the first and second ground attachment structures. The lower ends of these sheets or plates may form support structures or legs of the annular core, each standing on at least one of the first and the second ground attachment structure.

According to one embodiment the protective cage is made of metal such as steel.

The steel may for example be high-strength steel, ultra-high-strength steel, or high-strength low-alloy steel.

According to one embodiment the outer casing is made of metal such as steel.

According to one embodiment the synchronous condenser is configured to be connected to an electric grid operating in a voltage range of 5-15 kV.

The electric grid may be a distribution grid.

There is according to a second aspect of the present disclosure provided a synchronous condenser assembly configured to be connected to an electric grid, comprising: a flywheel device according to the first aspect, and a synchronous condenser comprising a synchronous condenser shaft connected to the flywheel shaft.

One embodiment comprises a pony motor configured to drive the synchronous condenser shaft up to a synchronisation speed of the electric grid.

Generally, all terms used in the claims are to be interpreted according to their ordinary meaning in the technical field, unless explicitly defined otherwise herein. All references to "a/an/the element, apparatus, component, means, etc. are to be interpreted openly as referring to at least one instance of the element, apparatus, component, means, etc., unless explicitly stated otherwise.

### BRIEF DESCRIPTION OF THE DRAWINGS

The specific embodiments of the inventive concept will now be described, by way of example, with reference to the accompanying drawings, in which:
- Fig. 1: is a perspective view of an example of a flywheel device;
- Fig. 2: is a perspective view of an example of a protective cage; and
- Fig. 3: diagrammatically shows a synchronous condenser assembly.

### DETAILED DESCRIPTION

The inventive concept will now be described more fully hereinafter with reference to the accompanying drawings, in which exemplifying embodiments are shown. The inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description.

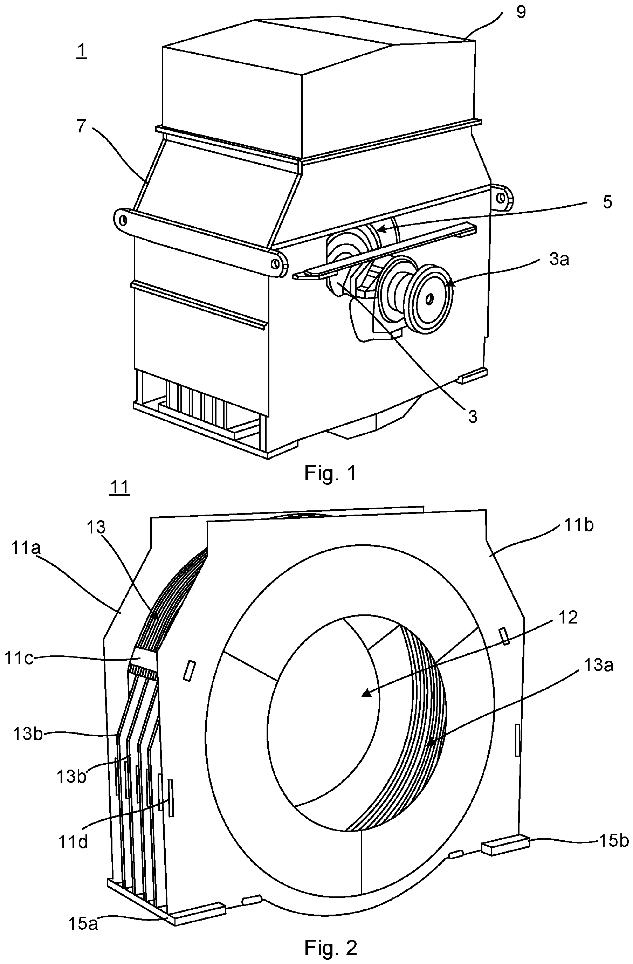

Fig. 1 shows an example of a flywheel device 1. The flywheel device 1 is configured for use with a synchronous condenser.

The synchronous condenser may for example be configured to be connected to a distribution grid. The synchronous condenser may for example be configured to be connected to an electric grid operating in a voltage range of 5-15 kV.

The flywheel device 1 comprises a flywheel shaft 3 and a flywheel unit 5 arranged around the flywheel shaft 3.

The flywheel shaft 3 is configured to be connected to a synchronous condenser shaft.

A first end 3a of the flywheel shaft 3 is configured to be connected to the synchronous condenser shaft. The first end 3a may for example comprise an axial opening having a non-circular cross-sectional shape configured to engage with a corresponding axially extending structure of the synchronous condenser shaft to prevent relative rotation between the flywheel shaft 3 and the synchronous condenser shaft.

Alternatively, the first end 3a may be provided with the axially extending structure and the synchronous condenser shaft may be provided with the axial opening having a non-circular cross-sectional shape.

The flywheel shaft 3 may be configured to be connected to a pony motor shaft of a pony motor. A second end of the flywheel shaft 3 may be configured to be connected to the pony motor shaft.

The flywheel unit 5 may comprise a single flywheel. Alternatively, the flywheel unit 5 may comprise a plurality of flywheels arranged one after the other along the flywheel shaft 3.

The flywheel unit 5 has a moment of inertia of at least 10000 kgm².

The flywheel device 1 comprises a protective cage 11 (see Fig. 2) which completely encircles the flywheel unit 5. The protective cage 11 thus surrounds the flywheel unit 5 circumferentially.

The protective cage 11 may for example be made of metal. The metal may be steel such as high-strength steel, ultra-high-strength steel, or high-strength low-alloy steel.

The flywheel device 1 comprises an outer casing 7 that houses the flywheel unit 5 and the protective cage 11. The outer casing 7 may be made of metal. The metal may for example be steel such as stainless steel.

The main functionality of the outer casing 7 is to enclose the flywheel unit 5 to protect operators from accidentally contacting the flywheel unit 5 when it rotates.

The flywheel device 1 may also comprise a cooling unit 9. The cooling unit 9 may have a housing that forms part of the outer casing 7. The cooling unit 9 is configured to provide cooling of the flywheel unit 5. The cooling unit 9 may for example be a water-cooling or an air-cooling unit.

Turning now to Fig. 2, an example of the protective cage 11 is shown. The protective cage 11 comprises an annular core 13. The exemplified annular core 13 has a circular through-opening 12 in which the flywheel unit 5 is arranged to rotate about its rotational axis.

The exemplified annular core 13 comprises a plurality of sheets or plates 13a, 13b arranged one after the other in the axial direction of the flywheel shaft 3. Adjacent sheets or plates 13a, 13b may be in direct physical contact with each other, or they may be bonded to each other, for example by means of an adhesive such as glue, to form a laminated annular core 13.

The sheets or plates 13a, 13b may be made of metal. The metal may be steel such as high-strength steel, ultra-high-strength steel, or high-strength low-alloy steel.

According to one example, two or more semi-circular sheets or plates may form a single annular sheet or plate 13a, 13b. The semi-circular sheets or plates may be arranged interleaved in the axial direction. The contact points between semi-circular sheets or plates of adjacent sheets or plates 13a, 13b may thus be offset from each other in the circumferential direction. Alternatively, each annular sheet or plate 13a, 13b may be a single integral structure.

According to one example, a subset of sheets or plates 13b of the sheets or plates 13a, 13b may extend radially further away from other sheets or plates 13a in a radial outward direction. The sheets or plates 13b of the subset thus extend laterally forming a fin-like structure extending from the remaining sheets or plates 13b in a direction away from the circular through-opening 12 of the annular core 13 which circumferentially encloses the flywheel unit 5.

The protective cage 11 comprises a first ground structure 15a and a second ground structure 15b. The first ground attachment structure 15a and the second ground attachment structure 15b support the annular core 13. The annular core 13 stands on the first ground attachment structure 15a and the second ground attachment structure 15b.

The first ground structure 15a and a second ground structure 15b may be planar structures configured for attachment of the protective cage 11 to ground, for example by means of screws and/or bolts. The first ground structure 15a and the second ground structure 15b may comprise through-openings configured to receive bolts and/or screws.

According to the example, each sheet or plate 13b of the subset extends to and is in contact with at least one of the first and second ground attachment structures 15a, 15b.

The annular core 13 may have a radial thickness dimension of at least 0.1 m, such as at least 0.2 m, such as at least 0.3 m, such as at least 0.4 m.

The annular core 13 may according to one example have a radial thickness dimension of at most 0.6 m, such as at most 0.5 m.

The radial thickness dimension is the radial distance between a point at the inner surface and a point at the outer surface of the annular core, i.e., along a radial line.

The protective cage 11 comprises a first axial end wall 11a and a second axial end wall 11b. The first axial end wall 11a is attached to one axial end of the annular core 13. The second axial end wall 11b is attached to the other axial end of the annular core 13.

The first axial end wall 11a may be mounted to a first axially outermost sheet or plate 13a, 13b and the second axial end wall 11b may be mounted to a second axially outermost sheet or plate 13a, 13b.

Each of the first axial end wall 11a and the second axial end wall 11b is provided with an end opening that is smaller in area than the circular through-opening 12 of the annular core 13. Minimum radial dimensions of the end openings are smaller than the diameter of the flywheel unit 5. The first axial end wall 11a and the second axial end wall 11b thus provide lateral protection of the flywheel unit 5 arranged inside the annular core 13.

The protective cage 11 may comprise crossbeams 11c, 11d extending between the first axial end wall 11a and the second axial end wall lib. Some of the crossbeams 11d may extend only through the sheets or plates 13b of the subset. The crossbeams 11c, 11d may be arranged to provide a mechanical connection between the first axial end wall 11a and the second axial end wall 11b.

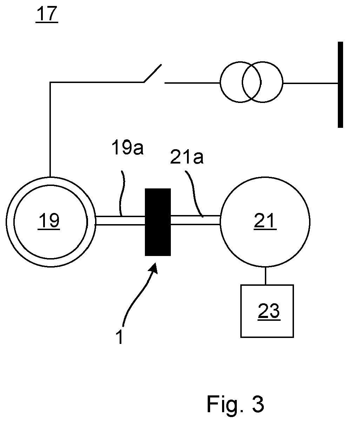

Fig. 3 shows a circuit diagram of a synchronous condenser assembly 17 connected to an electric grid.

The synchronous condenser assembly 17 comprises the flywheel device 1 and a synchronous condenser 19.

The exemplified synchronous condenser assembly 17 comprises a pony motor 21. The synchronous condenser assembly 17 may also comprise a drive, such as a variable speed drive, 23 configured to drive the pony motor 21.

The synchronous condenser 19 comprises a synchronous condenser shaft 19a configured to be connected to the flywheel shaft 3.

The pony motor 21 comprises a pony motor shaft 21a configured to be connected to the flywheel shaft 3.

The pony motor 21 is configured to drive the synchronous condenser shaft 19a via the flywheel shaft 3 up to a synchronisation speed of the electric grid.

The inventive concept has mainly been described above with reference to a few examples. However, as is readily appreciated by a person skilled in the art, other embodiments than the ones disclosed above are equally possible within the scope of the inventive concept, as defined by the appended claims.

## Claims

1. A flywheel device (1) for a synchronous condenser (19), comprising:
a flywheel shaft (3),
a flywheel unit (5) having a moment of inertia of at least 10000 kgm², arranged around the flywheel shaft (3),
a protective cage (11) arranged radially outside the flywheel unit (5), and
an outer casing (7) accommodating the flywheel unit (5) and the protective cage (11).

2. The flywheel device (1) as claimed in claim 1, wherein the protective cage (11) comprises an annular core (13) circumferentially entirely enclosing the flywheel unit (5).

3. The flywheel device (1) as claimed in claim 2, wherein the annular core (13) has a radial thickness dimension of at least 0.1 m, such as at least 0.2 m.

4. The flywheel device (1) as claimed in claim 2 or 3, wherein the annular core (13) has a radial thickness dimension of at most 0.6 m.

5. The flywheel device (1) as claimed in any of claims 2-4, wherein the annular core (13) comprises a plurality of sheets or plates (13a, 13b) arranged one after the other in a longitudinal direction of the flywheel shaft (3).

6. The flywheel device (1) as claimed in any of claims 2-5, wherein the protective cage (11) comprises a first and a second axial end wall (11a, 11b) attached to a respective axial end of the annular core (13), each of the first and the second axial end wall (11a, 11b) being provided with an end opening that has a smaller area than a circular through-opening (12) of the annular core (13).

7. The flywheel device (1) as claimed in claim 6 dependent of claim 5, wherein the first axial end wall (11a) is mounted to a first axially outermost sheet or plate (13a, 13b) at a first axial end of the annular core (13) and the second axial end wall (11b) is mounted to a second axially outermost sheet or plate (13a, 13b) at a second axial end of the annular core (13).

8. The flywheel device (1) as claimed in claim 6 or 7, comprising crossbeams (11c, 11d) extending between the first axial end wall (11a) and the second axial end wall (11b).

9. The flywheel device (1) as claimed in any of the preceding claims, wherein the protective cage (11) is made of metal such as steel.

10. The flywheel device (1) as claimed in any of the preceding claims, wherein the protective cage (11) comprises a first and a second ground attachment structure (15a, 15b) for attaching the protective cage (11) to the ground.

11. The flywheel device (1) as claimed in claim 10 dependent of claim 2, wherein the first ground attachment structure (15a) and the second ground attachment structure (15b) support the annular core (13).

12. The flywheel device (1) as claimed in any of the preceding claims, wherein the outer casing (7) is made of metal such as steel.

13. The flywheel device (1) as claimed in any of the preceding claims, wherein the synchronous condenser (19) is configured to be connected to an electric grid operating in a voltage range of 5-15 kV.

14. A synchronous condenser assembly (17) configured to be connected to an electric grid, comprising:
a flywheel device (1) as claimed in any of the preceding claims, and
a synchronous condenser (19) comprising a synchronous condenser shaft (19a) connected to the flywheel shaft (3).

15. The synchronous condenser assembly (17) as claimed in claim 14, comprising a pony motor (21) configured to drive the synchronous condenser shaft (19a) up to a synchronisation speed of the electric grid.
